# EUROPEAN PATENT APPLICATION

(11) **EP 4 564 308 A1**
(43) Date of publication of application: **04.06.2025**
(21) Application number: 23213411.4
(22) Date of filing: 30.11.2023
(51) Int. Cl.: G06V 10/25, G06V 10/26, G06V 10/764, G06V 20/58

(54) **METHOD AND SYSTEM FOR TRACKING AN OBJECT IN A FIELD OF VIEW OF A HOST VEHICLE**

(71) Applicant: Aptiv Technologies AG, 8200 Schaffhausen (CH)
(72) Inventor: CARLSTRÖM, Niclas, 416 57 Gothenburg (SE)
(74) Representative: Bardehle Pagenberg Partnerschaft mbB Patentanwälte Rechtsanwälte

(57) **Abstract**

The present application relates to the field of automotive advanced safety and autonomous driving, and more particular to a method, a system, and a computer-readable storage medium for tracking an object in a field of view, FOV, of a host vehicle. A computer-implemented method for tracking an object in a field of view, FOV, of a host vehicle comprises detecting and tracking, by a detection and tracking system mounted on the host vehicle, an object in the FOV. Upon failure of tracking the previously detected object in the FOV, a pseudo object representing the previously detected object is created, based on a last known position of the previously detected object and for a non-drivable portion of the FOV. Other aspects of the present invention relate to a corresponding system a corresponding computer-readable storage medium.

## Description

### Field of the invention

The present application relates to the field of automotive advanced safety and autonomous driving, and more particular to a method, a system, and a computer-readable storage medium for tracking an object in a field of view, FOV, of a host vehicle.

### Background

Advanced Driver Assistance Systems (ADAS) support drivers in order to drive a host vehicle more safely and comfortably. In order to perform properly and due to safety reasons, the environment in front of the host vehicle needs to be monitored, e.g., in order to determine a collision free space in front of the host vehicle. More particularly, safety functions such as Automatic Emergency Brake (AEB) and Adaptive Cruise Control (ACC) may rely on selecting a target vehicle that lies in the forward path of a host vehicle, i.e., a vehicle applying such safety functions. Based on a corresponding selected target vehicle the safety functions may control the host vehicle in such a way that a safe distance and/or a safe relative velocity to the selected target vehicle are maintained.

Accordingly, safety functions are dependent on that an object tracker employed by a host vehicle upstream robustly estimates both existence and states of a target object to be selected. However, if the object tracker for some reason fails to report the target vehicle directly in path of the host vehicle, safety functions such as AEB and ACC may similarly fail since no target object is detected and, hence, no such target object can be selected to be used by the safety functions of the host vehicle. As a result, there is a weakness in known safety systems where a poor object tracker of the host vehicle indirectly may lead to poor performance of safety functions and in worst case even may cause a collision of the host vehicle with another vehicle.

Accordingly, there is a need for improved methods and systems for tracking an object in a field of view, FOV, of a host vehicle.

### Summary of the invention

The invention is defined in the appended independent claims. Advantageous embodiments of the invention are defined in the dependent claims.

One aspect of the present invention relates to a computer-implemented method for tracking an object in a field of view, FOV, of a host vehicle. The method comprises detecting and tracking, by a detection and tracking system mounted on the host vehicle, an object in the FOV. Upon failure of tracking the previously detected object in the FOV, a pseudo object representing the previously detected object is created, based on a last known position of the previously detected object and for a non-drivable portion of the FOV.

By creating a pseudo object representing the previously detected object upon failure of tracking the previously detected object in the FOV, the invention avoids the above mentioned problems caused by a poor object tracker employed by a host vehicle. In particular, the invention ensures that safety functions such as Automatic Emergency Brake (AEB) and Adaptive Cruise Control (ACC) can still be applied even in the case of failure of an object tracking system of a host vehicle. Generally, the invention provides a more robust selection of a target object in front of a host vehicle for safety functions to be applied to a host vehicle.

In an embodiment, the creating of the pseudo object comprises evaluating the FOV of the host vehicle to determine the non-drivable portion of the FOV.

Evaluating the FOV of the host vehicle to determine the non-drivable portion of the FOV allows to compensate for the failure of the detecting and tracking system.

In a further embodiment, the evaluating of the FOV comprises evaluating a grid representation of the FOV, wherein the grid representation comprises a grid of cells, wherein each cell represents a portion of the FOV, and wherein each cell is classified according to a drivability classification, the drivability classification comprising at least drivable or non-drivable.

Using a grid representation of the FOV as claimed allows for an efficient determining of the non-drivable portion of the FOV.

In a further embodiment, the last known position of the previously detected object is defined by a bounding box located in the grid representation and enclosing the previously detected object. The evaluating of the FOV to determine the non-drivable portion of the FOV comprises creating a set of points in the grid representation in an area of a rear edge of the bounding box, determining, in increasing longitudinal direction relative to the bounding box and for each point of the set of points, if the respective point lies within a cell which is classified as non-drivable, and if the respective point lies within a cell which is classified as non-drivable, selecting the respective point as reference point in the grid representation for creating the pseudo object.

In this way, a reliable estimation of the target's current position after failure of the detection and tracking system is provided.

In a further embodiment, each point of the set of points is created to be positioned in the grid representation with a respective offset to the rear edge of the bounding box in longitudinal direction relative to the bounding box.

By applying an offset to the rear edge of the bounding box of the previously detected object, a change in the previously detected object's speed may be compensated for, as the object may have increased or decreased speed.

In a further embodiment, creating the set of points includes creating at least one point within each cell that is comprised in the area of the rear edge of the bounding box.

In this way, it is ensured that the created set of points is dense enough and, hence, the region of interest, i.e., a likely current position of the previously detected object, is sufficiently covered by the set of points.

In a further embodiment, the method further comprises creating, at the reference point in the grid representation, a pseudo bounding box representing the pseudo object. The pseudo bounding box is created with dimensions corresponding to dimensions of the bounding box representing the previously detected object, wherein a rear edge of the pseudo bounding box is positioned at the reference point. Accordingly, the pseudo bounding box is shifted in longitudinal direction relative to the bounding box of the previously detected object. Further, properties of the previously detected object are assigned to the created pseudo object.

In this way, a pseudo object with same properties and dimensions as the previously detected object can be created at a likely current position of the previously detected object, to ensure that, e.g., safety function which rely on a target selection in the forward path of a host vehicle are still applicable to the host vehicle despite failure of the detection and tracking system.

In a further embodiment, creating the set of points is based on a set of parameters.

This allows more flexibility regarding the region of interest in which the previously detected object is likely to be located after loss of its detection and tracking signal.

In a further embodiment, the set of parameters comprises a horizontal distance and/or a vertical distance between two adjacent points in the set of points.

In this way, the density of the created set of points can be adjusted.

In a further embodiment, the set of parameters comprises a number of points to be created.

This is a further parameter which allows to adjust the density of the created set of points.

In a further embodiment, the last known position of the previously detected object is compensated regarding motion of the host vehicle prior to creating the pseudo object.

This allows for a more reliable determining of a current position of the previously detected object and, in turn, a more reliable position of the created pseudo object.

In a further embodiment, the method further comprises selecting the created pseudo object as a target object for applying one or more safety functions.

Using the created pseudo object as a target object for applying one or more safety functions enhances driving safety and may ensure a safe distance and a safe relative velocity to a target vehicle even in the case of a failure of the detection and tracking system.

In a further embodiment, the one or more safety functions comprise at least Automatic Emergency Brake, AEB, and Adaptive Cruise Control, ACC.

Another aspect of the present invention relates to a system comprising means for carrying out the above described computer implemented method.

Still another aspect of the present invention relates to a computer-readable storage medium comprising instructions which, when executed by a computer, cause the computer to carry out the above described method.

### Brief description of the drawings

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: illustrates a typical road scenario;
- Fig. 2: illustrates an object tracking scenario;
- Fig. 3: illustrates an object tracking scenario after loss of a tracked target;
- Fig. 4: illustrates a computer-implemented method for tracking an object in a field of view, FOV, of a host vehicle; and
- Fig. 5: illustrates a system for tracking an object in a field of view, FOV, of a host vehicle.

### Detailed description

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the scope of the disclosure.

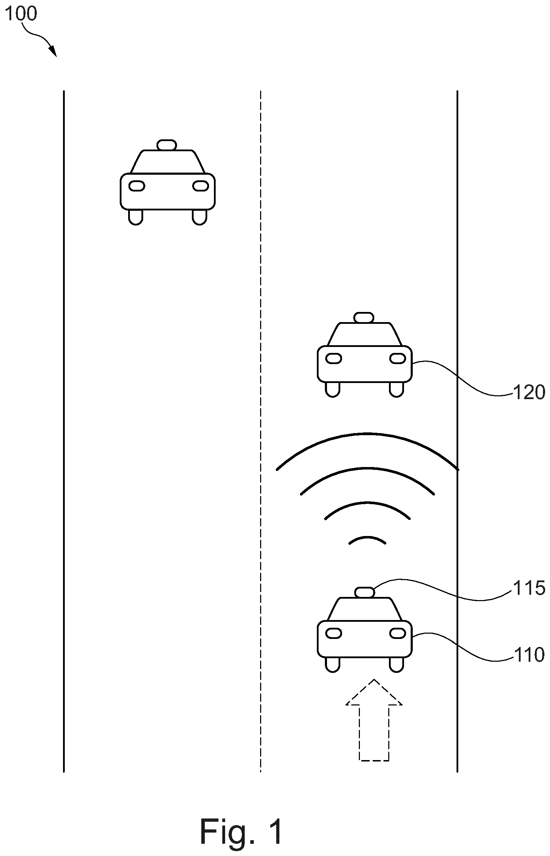

Fig. 1 illustrates a typical road scenario 100 with three vehicles. Ahead of a host vehicle 110, another vehicle 120 is travelling in the forward path (i.e., the field of view, FOV) of the host vehicle 110 (direction indicated by the dashed arrow). A detection and tracking system 115 is mounted on the host vehicle 110. In the scenario shown, the detection and tracking system 115 has detected the other vehicle 120 in the forward path of the host vehicle 110, and is tracking the other vehicle 120 as a target object. The target object may be used for applying, e.g., a safety function, such as AEB (Automatic Emergency Break) and ACC (Adaptive Cruise Control). As detection and tracking system 115, any range sensor may be employed to acquire range detections, such as LiDAR sensors or radar sensors.

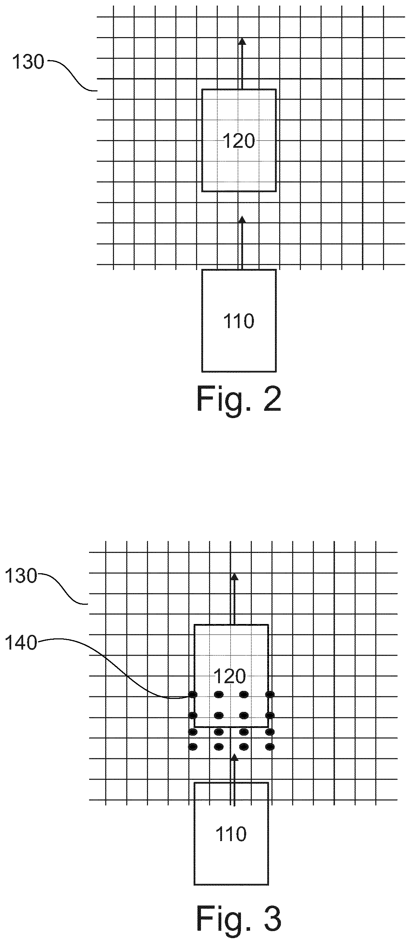

Fig. 2 illustrates a different view of the scenario as shown in Fig. 1. As illustrated in Fig. 2, vehicle 120 in the forward path of host vehicle 110 is detected and tracked via the detection and tracking system 115 as a target object. As shown, the detected vehicle 120 may be represented by a bounding box enclosing the detected vehicle 120. The size of the respective bounding box is considered to correspond to the real object size, i.e., width and length of the corresponding detected and tracked vehicle 120.

As illustrated in Fig 3, at a certain time, the tracking of the previously detected object 120 in the host vehicle's FOV may fail (indicated by a dashed bounding box representing the loss of the previously detected object 120). In known systems, if the tracking of a previously detected object in the forward path of a host vehicle for some reason fails, features or safety functions such as AEB and ACC may also fail since no target object can be selected for these safety functions. Consequently, a poor object tracker indirectly may lead to poor feature performance and in worst case even cause a collision of the host vehicle and an object in its forward path.

According to the invention, the problem of a sudden loss of a previously detected object in the forward path of a host vehicle is handled by evaluating a grid representation of the surroundings in front of the host vehicle (i.e., the host vehicle's FOV) in the proximity of the previously detected object's last known position, to create a pseudo objection representing the previously detected object 120, which can then be used as target object for the host vehicle's safety functions.

Fig. 3 shows a corresponding scenario of a sudden loss of the previously detected object 120, indicated by a dashed bounding box representing previously detected object 120. Fig. 3 also shows grid representation 130 of the FOV of the host vehicle 110. Grid representation 130 comprises a grid of cells, wherein each cell represents a portion of the FOV, and wherein each cell (and thus each portion of the host vehicle's FOV) is classified according to a drivability classification, the drivability classification comprising at least drivable or non-drivable.

Grid representation 130 may be created and updated using numerous different sources such as Vision lane markers and trails of tracked objects but also radar and vision "freespace" algorithms. A "freespace" algorithm divides the FOV of one or several sensors (such as detection and tracking system 115) into segments and reports a distance for each segment where the segment is occupied (i.e., non-drivable). The algorithm transforms the various sources into cells which yields the grid representation 130, where each cell is classified as either drivable, non-drivable or unknown. Accordingly, grid representation 130 may be used to detect that something is ahead of host vehicle 110 even when the upstream object tracker (such as detection and tracking system 115) suddenly fails to report it.

A non-drivable portion of the FOV may be a hint towards a possible current position of the previously detected object 120. To identify a non-drivable portion of the FOV, i.e., a cell of grid representation 130 classified as non-drivable, the last known position of the previously detected object 120 is saved. In an embodiment, the last known position may optionally be compensated for eventual motion of the host vehicle 110 relative to the previously detected object 120.

As shown in Fig. 3, as the travelling speed of the previously detected object 120 may have changed since the tracking failure, a set of points 140 is created in an area of a rear edge of the previously detected object's bounding box. More specifically, to compensate for a change in the previously detected object's travelling speed, each point 140 is created to be positioned in the grid representation 130 with a certain offset to the rear edge of the bounding box in longitudinal direction relative to the bounding box. The points 140 are then evaluated in the grid representation 130 in increasing longitudinal order. If any point 140 is determined during the evaluation to lie in a cell classified as non-drivable, the respective point 140 is selected as a reference point in the grid representation 130 for creating a pseudo object. In turn, a pseudo bounding box representing the pseudo object is created, wherein the pseudo bounding box is created with dimensions corresponding to dimensions of the bounding box representing the previously detected object 120. As shown in Fig. 3, a rear edge of the created pseudo bounding box is positioned at the reference point 140 in the grid representation 130.

In other words, the pseudo object is created using inherited properties from the previously detected object 120. That is, the created pseudo object has the same properties as the previously detected object 120, except that the longitudinal position of the rear edge of the bounding box enclosing the created pseudo object is shifted to the reference point 140 that has been determined as lying within the first encountered non-drivable cell in the grid representation 130.

To ensure that the created set of points 140 is dense enough and, hence, the region of interest, i.e., a likely current position of the previously detected object, is sufficiently covered by the set of points 140, at least one point 140 is created within each cell that is comprised in the area of the rear edge of the bounding box enclosing the previously detected object 120.

To allow more flexibility regarding the region of interest in which the previously detected object 120 is likely to be located after loss of its detection and tracking signal, the set of points 140 may be created based on a set of parameters. For instance, to adjust the density of the created set of points 140, the set of parameters may comprise a horizontal distance and/or a vertical distance between two adjacent points. In addition or alternatively, the set of parameters may comprise a number of points 140 to be created.

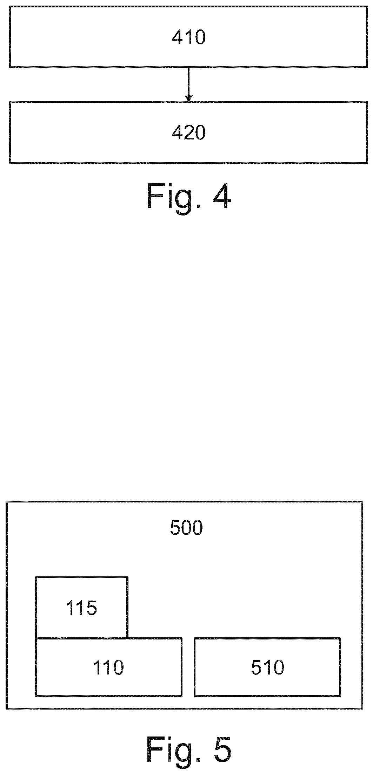

Fig. 4 illustrates a computer-implemented method for tracking an object in a field of view, FOV, of a host vehicle 110. The method comprises a step 410 of detecting and tracking, by a detection and tracking system 115 mounted on the host vehicle 110, an object 120 in the FOV. Upon failure of tracking the previously detected object 120 in the FOV, a pseudo object representing the previously detected object 120 is created in step 420, based on a last known position of the previously detected object 120 and for a non-drivable portion of the FOV.

Fig. 5 illustrates a system 500 for tracking an object in a field of view, FOV, of a host vehicle 110. The system 500 comprises a detection and tracking system 115 mounted on the host vehicle 110, wherein the detection and tracking system 115 is configured for detecting and tracking an object 120 in the FOV. The system further comprises means 510 configured for, upon failure of tracking the previously detected object 120 in the FOV, creating, based on a last known position of the previously detected object 120 and for a non-drivable portion of the FOV, a pseudo object representing the previously detected object 120.

The present invention allows for a more robust target selection even when an upstream object tracker fails and loses track of an existing object. In particular, the present invention may ensure proper operation of safety functions in a host vehicle even in the case of failure of an object tracker employed by the host vehicle, to avoid incidents such as a collision of the host vehicle with another vehicle. The present invention may be useful in many applications of automotive advanced safety and autonomous driving, as it is capable of maintaining feature functionality that requires a target object in a host vehicle's forward path. For example, AEB and ACC features can remain enabled even when an upstream object tracker for some reason fails to report an existing object in the host vehicle's forward path.

The various embodiments described above are provided by way of illustration only and should not be construed to limit the invention. Those skilled in the art will readily recognize various modifications and changes that may be made to the present invention without following the example embodiments and applications illustrated and described herein, and without departing from the scope of the present disclosure.

## Claims

1. Computer implemented method for tracking an object (120) in a field of view, FOV, of a host vehicle (110), the method comprising:
detecting and tracking (410), by a detection and tracking system (115) mounted on the host vehicle (110), an object (120) in the FOV;
upon failure of tracking the previously detected object (120) in the FOV, creating (420), based on a last known position of the previously detected object (120) and for a non-drivable portion of the FOV, a pseudo object representing the previously detected object (120).

2. The computer implemented method of claim 1, wherein the creating (420) of the pseudo object comprises evaluating the FOV of the host vehicle (110) to determine the non-drivable portion of the FOV.

3. The computer implemented method of claim 2, wherein the evaluating of the FOV comprises evaluating a grid representation (130) of the FOV, wherein the grid representation (130) comprises a grid of cells, wherein each cell represents a portion of the FOV, and wherein each cell is classified according to a drivability classification, the drivability classification comprising at least drivable or non-drivable.

4. The computer implemented method of any of claims 2 and 3, wherein:
the last known position of the previously detected object (120) is defined by a bounding box located in the grid representation (130) and enclosing the previously detected object (120); and
the evaluating of the FOV to determine the non-drivable portion of the FOV comprises:
creating a set of points (140) in the grid representation (130) in an area of a rear edge of the bounding box;
determining, in increasing longitudinal direction relative to the bounding box and for each point (140) of the set of points (140), if the respective point (140) lies within a cell which is classified as non-drivable; and
if the respective point (140) lies within a cell which is classified as non-drivable, selecting the respective point (140) as reference point in the grid representation (130) for creating the pseudo object.

5. The computer implemented method of claim 4, wherein each point (140) of the set of points (140) is created to be positioned in the grid representation (130) with a respective offset to the rear edge of the bounding box in longitudinal direction relative to the bounding box.

6. The computer implemented method of any of claims 4 to 5, wherein creating the set of points (140) includes creating at least one point (140) within each cell that is comprised in the area of the rear edge of the bounding box.

7. The computer implemented method of any of claims 4 to 6, further comprising:
creating, at the reference point in the grid representation (130), a pseudo bounding box representing the pseudo object, wherein the pseudo bounding box is created with dimensions corresponding to dimensions of the bounding box representing the previously detected object (120), and wherein a rear edge of the pseudo bounding box is positioned at the reference point; and
assigning properties of the previously detected object (120) to the created pseudo object.

8. The computer implemented method of any of claims 4 to 7, wherein creating the set of points (140) is based on a set of parameters.

9. The computer implemented method of claim 8, wherein the set of parameters comprises a horizontal distance and/or a vertical distance between two adjacent points (140) in the set of points (140).

10. The computer implemented method of any of claims 8 and 9, wherein the set of parameters comprises a number of points (140) to be created.

11. The computer implemented method of any of the preceding claims, wherein prior to creating (420) the pseudo object, the last known position of the previously detected object (120) is compensated regarding motion of the host vehicle (110).

12. The computer implemented method according to any of the preceding claims, further comprising selecting the created pseudo object as a target object for applying one or more safety functions.

13. The computer implemented method of claim 12, wherein the one or more safety functions comprise at least Automatic Emergency Brake, AEB, and Adaptive Cruise Control, ACC.

14. System (500) comprising means (110, 1150, 510) for carrying out the computer implemented method of any of claims 1 to 13.

15. Computer readable storage medium comprising instructions which, when executed by a computer, cause the computer to carry out the computer implemented method of any of claims 1 to 13.
